# EUROPÄISCHE PATENTSCHRIFT

(11) **EP 3 340 843 B1**
(45) Veröffentlichungstag und Bekanntmachung des Hinweises auf die Patenterteilung: **21.07.2021**
(21) Anmeldenummer: 16774448.1
(22) Anmeldetag: 29.08.2016
(51) Int. Cl.: A47J 37/07, F24C 15/16

(54) **GRILLROST MIT AUFFANGSCHALE**
GRILL GRATE HAVING A COLLECTING TRAY
GRILLE DE GRIL COMPORTANT UNE COQUE DE RECUEILLEMENT

(30) Priorität: 29.08.2015 DE 202015005993 U
(43) Veröffentlichungstag der Anmeldung: 04.07.2018
(73) Patentinhaber: Kaiser, Thomas, 87463 Überbach (DE); Wassermann, Christian, 87640 Ebenhofen (DE)
(72) Erfinder: Kaiser, Thomas, 87463 Überbach (DE); Wassermann, Christian, 87640 Ebenhofen (DE)
(74) Vertreter: Gille Hrabal Partnerschaftsgesellschaft mbB Patentanwälte
(86) Internationale Anmeldenummer: PCT/EP2016/001458
(87) Internationale Veröffentlichungsnummer: WO 2017/036590

(56) Entgegenhaltungen:
- DE-A1-102004 042 856
- US-A- 5 911 812
- US-A1- 2003 140 799

## Beschreibung

Die Erfindung betrifft einen Grillrost mit Auffangschale gemäß den oberbegrifflichen Merkmalen des Anspruchs 1.

Derartige Grillroste bestehen meist aus einem viereckigen oder runden Rahmen mit vielen Stegen oder Stäben, die in Art eines Gitters voneinander gleichmäßig beabstandet sind, um so eine Grillfläche über einem Glutbett zu bilden. Diese Grillfläche ist meist höhenverstellbar, um diverse Lebensmittel z. B. bei Gartenpartys zu grillen oder zu garen. Als Glutbett wird oft Holzkohle verwendet, mit deren Hitze die Speisen zubereitet werden. Um ein Abtropfen von Fett in das Glutbett zu vermeiden, ist es bekannt, unter dem Grillrost (meist aus verchromten Drähten oder aus Edelstahl oder aus Gusseisen) eine Auffangschale anzuordnen, die Fettreste bzw. Öle speichert oder ableitet.

Derartige Auffangschalen weisen direkt unter den Stegen des Grillrosts eine entsprechende Vielzahl länglicher Durchbrüche oder Ausstanzungen zur Hitzedurchleitung auf, die zur Schaffung eines Speichervolumens an den Rändern hin erhöht sind, aber grundsätzlich die Auffangschale schwächen, insbesondere an der oder den Mittelachse(-n), welche an die Ausstanzungen angrenzen. Um ein "Durchbiegen" entlang solcher Schwachstellen der nur an den Außenkanten abgestützten Auffangschale zu vermeiden, ist somit eine Mindestblechstärke nötig, da ansonsten das zum Ablaufen nötige Gefälle aufgrund des "Durchhangs" eliminiert werden könnte und Fett dann sogar durch die Ausstanzungen durchtropfen könnte. Eine größere Blechstärke erhöht jedoch den Herstellungsaufwand erheblich, da besonders stabile Werkzeuge und hohe Antriebsleistungen der Stanzmaschinen nötig sind.

Der Erfindung liegt daher die Aufgabe zugrunde, einen Grillrost mit Auffangschale zu schaffen, die günstig herzustellen ist und hohe Stabilität bietet.

Diese Aufgabe wird gelöst mit den Merkmalen des Anspruchs 1. Vorteilhafte Ausführungen sind Gegenstand der Unteransprüche.

Durch die besondere Gestaltung der Auffangschale wird deren Stabilität wesentlich erhöht, so dass sichergestellt wird, dass abtropfendes Fett nicht in das Glutbett gelangen kann.

Zudem wird mit den gleichförmig angeordneten Durchbrüchen eine gleichmäßige Erhitzung des Rosts sichergestellt, sowie ein effektiver Rauchabzug, ohne das Grillgut zu schädigen. Eine solche Grillrost-Anordnung ist an sich aus der US 5,911, 812 A bekannt.

Erfindungsgemäß wird hierzu vorgeschlagen, dass bei dem Grillrost mit Auffangschale, die direkt unterhalb von Stegprofilen des Grillrosts anbringbar ist und eine Vielzahl von Durchbrüchen zur Hitzedurchleitung aufweist, die Durchbrüche in ihrer Ausrichtung gruppenweise winklig zueinander angeordnet sind, nämlich in einem Fischgrätmuster. Der Begriff "gruppenweise" bedeutet hierbei, dass pro Grillrost bzw. zugehöriger Auffangschale mehrere (z. B. zwei Dutzend) Ausstanzungen analog zum Verlauf der gitterförmigen Stegprofile (in Draufsicht gesehen) nach "links" geneigt sind und die entsprechende Anzahl (die andere Gruppe) nach "rechts" ausgerichtet sind.

Bevorzugt weisen die Durchbrüche jeweils eine Langlochform auf, wobei die Durchbrüche einer Gruppe (bzw. Reihe) unter ca. 60° auf die jeweilige Mitte der Durchbrüche der anderen Gruppe ausgerichtet sind. Hierdurch wird die Biegesteifigkeit erheblich erhöht. Somit kann die Auffangschale aus relativ dünnem Blech als Stanzteil aus Edelstahl oder Aluminium hergestellt werden. Durch diese Anordnung wird eine vorteilhafte Ausrichtung der Stegprofile des Grillrosts in Trapez- oder Rautenform möglich, um das beim Grillen oft erwünschte gitterförmige "Branding" durchzuführen, insbesondere in der Ausführung als Gussrost. Weiterhin können die Stegprofile auf einer der zwei Auflageflächen (wechselweise einsetzbar als sog. Wenderost) des Grillrosts vertiefte Rillen aufweisen, um ein sog. "Mikro-Branding" durchzuführen. Zudem wird durch Fettreste in dieser Rillung ein Anhaften des Grillgutes weitgehend verhindert.

Zur sicheren Verankerung am Grillrost weist die Auffangschale mehrere, nach oben weisende Haken auf, insbesondere am Außenrand der Auffangschale. Somit können die Haken an den Stegprofilen des Grillrosts (oder auch an dessen umlaufenden Rahmen) formschlüssig einrasten.

In der Auffangschale sind dabei angrenzend zu bzw. zwischen den (ca. fünfzig oder sechzig) Durchbrüchen entsprechend viele Tropfwannen ausgeformt, so dass bei geringer Bauhöhe erhebliche Mengen an Tropffett aufgenommen werden kann. In diese Tropfwannen können vor dem Grillen auch Gewürze oder Kräuter eingelegt werden, die dem Grillgut zusätzliche Würze verleihen können. Bevorzugt weisen die Tropfwannen einen (in Gebrauchsstellung) nach unten gewölbten Boden auf, so dass die einzelnen Speichervolumina vergrößert werden, aber durch die ausgerundete Form auch die Biegestabilität der gesamten Auffangschale erhöht wird.

Hierbei sind zumindest mehrere, bevorzugt alle Tropfwannen der Auffangschale mit eingeprägten Rinnen untereinander verbunden, so dass bei lokalen Fettanhäufungen am Grillgut (z. B. Fettrand eines Steaks) davon abtropfendes Fett in Folge der Oberflächenspannung auf die benachbarten Tropfwannen übertreten kann. Dadurch wird eine gleichmäßige Füllhöhe der Auffangschale erzielt bzw. eine Überlaufen einzelner Kammern bzw. Wannen vermieden. Bevorzugt sind dabei mehrere der Rinnen rechtwinklig zur Längserstreckung der Durchbrüche ausgerichtet, so dass die an sich "instabilen" Biegelinien "blockiert" werden und so die Formfestigkeit erhöht wird.

Nachfolgend werden zwei Ausführungsbeispiele anhand der Zeichnung näher erläutert. Hierbei zeigen:
Fig. 1 einen Grillrost mit daran befestigter Auffangschale, wobei diese Baueinheit die Hälfte einer runden Grillfläche bildet und zum Betrachter hin geklappt ist;
Fig. 2 den Grillrost gemäß Fig. 1 in auseinander gezogener Darstellung;
Fig. 3 einen Querschnitt durch den Grillrost nach Fig. 1 und 2;
Fig. 4 einen perspektivischen Schnitt, wobei die Grillfläche über der Auffangschale um 180° gedreht (gewendet) ist;
Fig. 5 eine Perspektivansicht einer leicht abgewandelten Auffangschale;
Fig. 6 eine perspektivische Schnittdarstellung der Auffangschale nach Fig. 5 unterhalb eines Grillrosts (ähnlich zu Fig. 1 und 2);
Fig. 7 eine Querschnittsansicht zur Ausführung nach Fig. 6; und
Fig. 8 eine vergrößerte Darstellung mit Verbindungs-Rinnen.

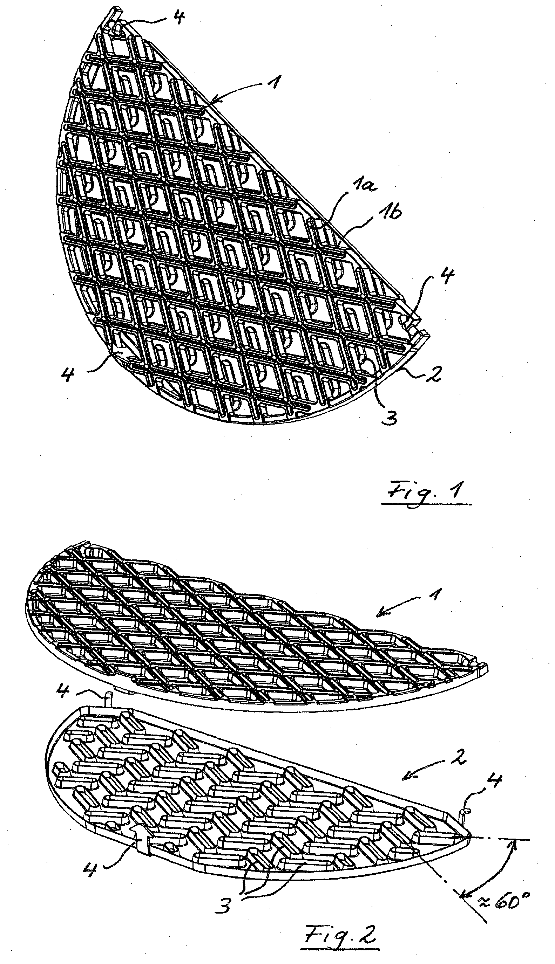

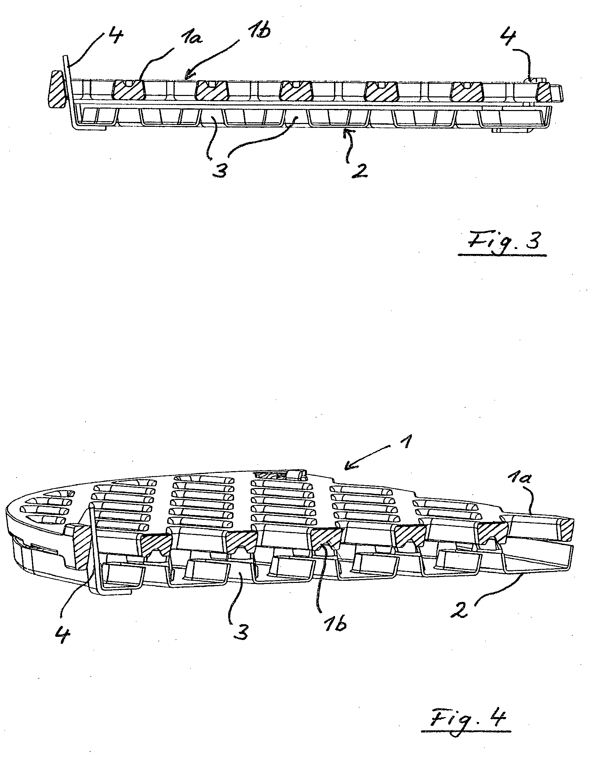

Fig. 1 zeigt eine Grillfläche eines Grillrosts 1 für einen nicht dargestellten Grill, wobei die Rostfläche hier nur als eine Hälfte dargestellt ist. Am Grillrost 1 ist eine Auffangschale 2 mittels Haken 4 befestigt und bildet somit eine Einheit, um beim Grillen vom Grillgut abtropfendes Fett bzw. Marinaden usw. vom Glut abzuhalten (vgl. Fig. 3). Der Grillrost 1 weist eine Vielzahl von Stegprofilen 1a auf, die deckungsgleich zu einer entsprechenden Anzahl von Durchbrüchen 3 in der Auffangschale 2 angeordnet sind. Die Durchbrüche 3 sind in Gruppen bzw. Reihen angeordnet (vgl. Fig. 2) und weisen erhöhte Ränder auf, so dass Fett in Art eines Labyrinths aufgefangen wird, aber die aufsteigende Hitze zum Grillrost 1 gelangen kann und ggf. Rauch abgeleitet wird.

Wie deutlicher in Fig. 2 dargestellt, sind die Durchbrüche 3 in ihrer Ausrichtung gruppenweise winklig zueinander angeordnet, nämlich in Form eines sog. Fischgrätmusters. Die Durchbrüche 3 weisen bevorzugt jeweils eine Langlochform auf, wobei die Durchbrüche 3 einer Gruppe bzw. Reihe unter ca. 60° auf die jeweilige Mitte der Durchbrüche 3 der anderen Gruppe ausgerichtet sind. Hierdurch wird die Biegesteifigkeit der Auffangschale 2 wesentlich erhöht und die Herstellung aus relativ dünnem Blech ermöglicht.

Wie weiter aus Fig. 2 ersichtlich, kann der Grillrost 1 bzw. dessen Stegprofile 1a damit in einer für das "branding" erwünschten Trapez- oder Rautenform angeordnet sein. Zudem können die Stegprofile 1a auf einer (hier oberen) Auflagefläche für das Grillgut eine vertiefte Rillung 1b aufweisen, so dass beim Grillen ein sog. "Mikro-branding" auf dem Grillgut entsteht (vgl. auch Fig. 1 und 3). Diese Rillung 1b ist bei der bevorzugten Ausführung als Gussrost miteingegossen, wobei durch die Rillen auch die Anhaftung des Grillgutes reduziert werden kann.

In bevorzugter Ausführung sind die beiden Auflageflächen wechselweise positionierbar (vgl. Fig. 3 und Fig. 4, in der die Rillung 1b nach Wenden des Grillrosts 1 nach unten zeigen). Zur sicheren Verankerung am Grillrost 1 besitzt die Auffangschale 2 hier drei, nach oben weisende Haken 4, insbesondere am Außenrand bzw. an den "Ecken", so die Auffangschale 2 mit ihren Haken 4 an den Stegprofilen 1a bzw. am Rand des Grillrosts 1 einrasten kann.

Wie aus Fig. 3 erkennbar, kann die Auffangschale 2 mit vielen Durchbrüchen 3 und erhöhten Rändern als Stanzteil aus relativ dünnem Blech, insbesondere aus Edelstahl oder Aluminium hergestellt werden. Die unteren Enden der Haken 4 können an der Auffangschale 2 angeschweißt sein und untergreifen diese für zusätzliche Stabilität. Aus dem Querschnitt ist zudem die Anordnung der Durchbrüche 3 direkt unterhalb der jeweiligen Stegprofile 1a erkennbar, wobei hier die Rillung 1b nach oben zeigt.

In Fig. 4 ist der Grillrost 1 hingegen um 180° gedreht bzw. gewendet, so dass die Stegprofile 1a in dieser Position zum Grillgut hin breitflächiger ist, wie z. B. beim Grillen bzw. Garen von Gemüse erwünscht ist. Wie ersichtlich, sind die Durchbrüche 3 wiederum deckungsgleich direkt unter den Stegprofilen 1a angeordnet, so dass diese gut aufgeheizt werden, aber vom Grillgut ggf. abtropfende Flüssigkeit (z. B. auch Gemüsesaft, Saucen, Marinaden, etc.) sicher in der Auffangschale 2 gelangt. Nach dem Grillvorgang kann die Auffangschale 2 einfach vom Grillrost 1 gelöst und gereinigt werden.

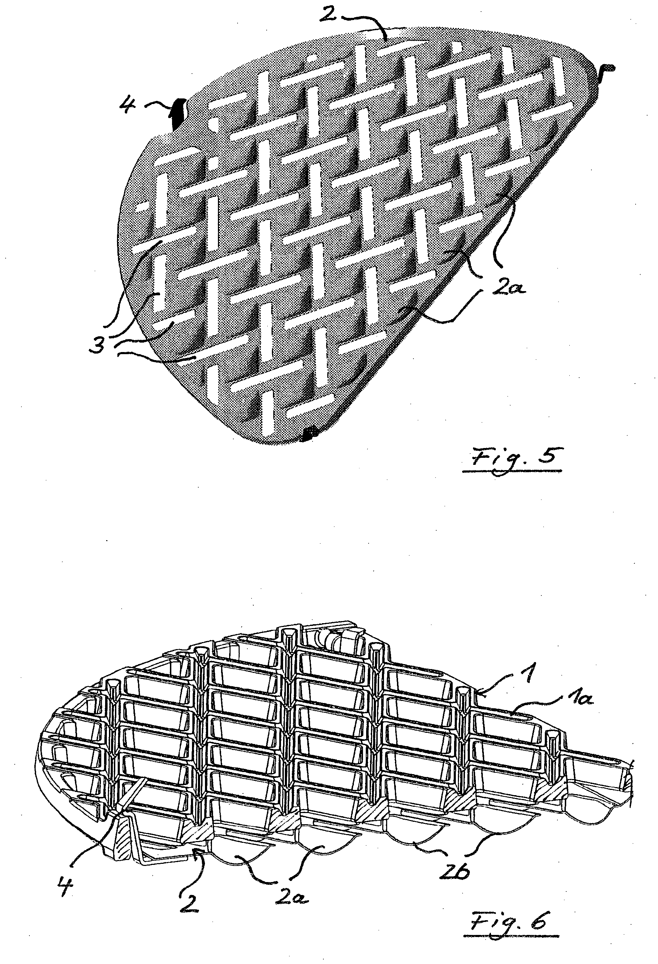

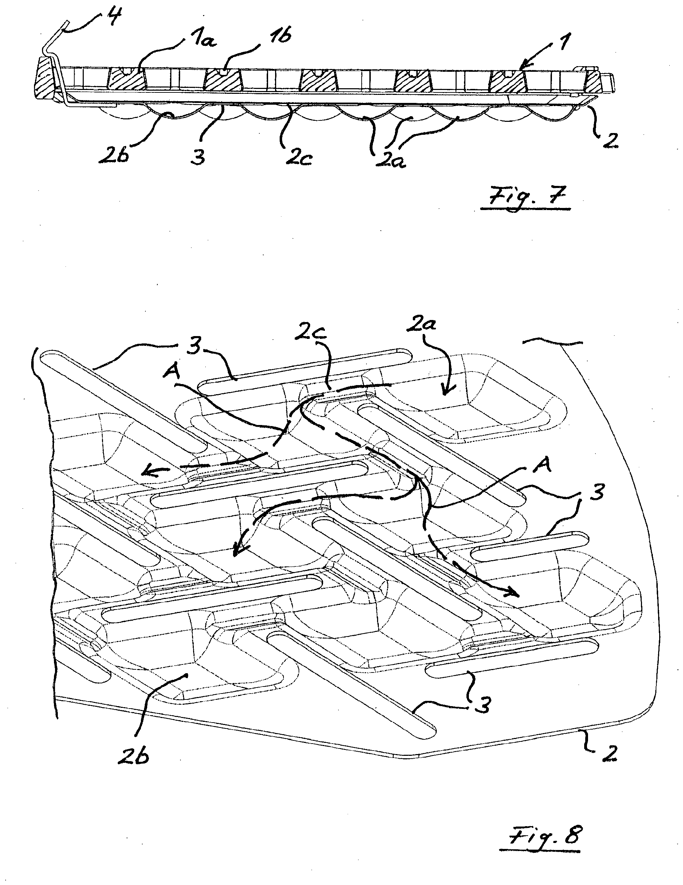

In Fig. 5 ist eine leicht abgewandelte Auffangschale 2 gezeigt, bei der zwischen bzw. benachbart zu den Durchbrüchen 3 eine Vielzahl von kleinen Tropfwannen 2a ausgeformt ist. Wie aus Fig. 6 ersichtlich, weisen diese Tropfwannen 2a unterhalb des Grillrosts einen nach unten gewölbten Boden 2b auf, so dass relativ viel abtropfendes Fett aufgefangen werden kann. Dies ist auch aus dem Querschnitt gemäß Fig. 7 gut erkennbar.

In Fig. 7 sind zudem unterhalb des Grillrosts 1 relativ flache Kanäle oder Rinnen 2c eingezeichnet, welche zumindest mehrere, bevorzugt alle Tropfwannen 2a untereinander verbinden und durch Oberflächenspannung den Übertritt von Öl oder Flüssigfett in die benachbarten Wannen zulassen. Diese benachbart zu den Durchbrüchen 3 eingeprägten Rinnen 2c sind in Fig. 8 vergrößert dargestellt, wobei hier ausgehend von der ganz rechts angeordneten Tropfwanne 2a der Übertritt zu benachbarten Wannen oder Vertiefungen mit Strichlinien A angedeutet ist. Hierdurch wird ein großes Fassungsvermögen bei geringer Bauhöhe erzielt. Da zudem wenigstens mehrere der Rinnen 2c rechtwinklig zur Längserstreckung der im Fischgrätmuster angeordneten Durchbrüche 3 ausgerichtet sind, wird insgesamt die Biegefestigkeit der Auffangschale 2 bei vereinfachter Herstellung erhöht.

## Patentansprüche

1. Grillrost mit Auffangschale, die direkt unterhalb von Stegprofilen (1a) des Grillrosts (1) anbringbar ist und eine Vielzahl von länglichen Durchbrüchen (3) zur Hitzedurchleitung aufweist, wobei die Durchbrüche (3) zum Grillrost (1) hin erhöht sind und in ihrer Längsausrichtung gruppenweise winklig zueinander angeordnet sind,
**dadurch gekennzeichnet, dass**
die Durchbrüche (3) in einem Fischgrätmuster zueinander angeordnet sind.

2. Grillrost nach Anspruch 1, **dadurch gekennzeichnet, dass**
die Durchbrüche (3) jeweils eine Langlochform mit parallelen Seitenkanten aufweisen.

3. Grillrost nach Anspruch 1 oder 2, **dadurch gekennzeichnet, dass**
die Stegprofile (1a) in Trapez- oder Rautenform angeordnet sind und die Durchbrüche (3) sich in ihrer Längsachse kreuzen.

4. Grillrost nach einem der Ansprüche 1 bis 3, **dadurch gekennzeichnet, dass**
die Stegprofile (1a) auf einer Auflagefläche eine vertiefte Rillung (1b) aufweisen.

5. Grillrost nach Anspruch 4, **dadurch gekennzeichnet, dass**
die Rillung (1b) bei Ausführung als Gussrost miteingegossen ist.

6. Grillrost nach einem der Ansprüche 1 bis 5, **dadurch gekennzeichnet, dass**
der Grillrost (1) zwei Auflageflächen besitzt, die wechselweise positionierbar sind.

7. Grillrost nach einem der Ansprüche 1 bis 6, **dadurch gekennzeichnet, dass**
die Auffangschale (2) mehrere, nach oben weisende Haken (4) aufweist, insbesondere am Außenrand der Auffangschale (2).

8. Grillrost nach Anspruch 7, **dadurch gekennzeichnet, dass** die Haken (4) an den Stegprofilen (1a) einrastbar sind, wobei einer der Haken (4) bevorzugt pfeilförmig ist.

9. Grillrost nach einem der Ansprüche 1 bis 8, **dadurch gekennzeichnet, dass**
die Auffangschale (2) als Blechstanzteil aus Stahl, Edelstahl oder Aluminium hergestellt ist.

10. Grillrost nach einem der Ansprüche 1 bis 9, **dadurch gekennzeichnet, dass**
die Durchbrüche (3) einer Gruppe unter ca. 60° auf die jeweilige Mitte der Durchbrüche (3) der anderen Gruppe ausgerichtet sind.

11. Grillrost nach einem der Ansprüche 1 bis 10, **dadurch gekennzeichnet, dass**
zwischen den Durchbrüchen (3) eine Vielzahl von Tropfwannen (2a) ausgeformt ist.

12. Grillrost nach Anspruch 11, **dadurch gekennzeichnet, dass**
die Tropfwannen (2a) einen nach unten gewölbten Boden (2b) aufweisen.

13. Grillrost nach Anspruch 11 oder 12, **dadurch gekennzeichnet, dass**
zumindest mehrere, bevorzugt alle Tropfwannen (2a) mit eingeprägten Rinnen (2c) untereinander verbunden sind.

14. Grillrost nach Anspruch 13, **dadurch gekennzeichnet, dass**
mehrere Rinnen (2c) rechtwinklig zur Längserstreckung der Durchbrüche (3) ausgerichtet sind.

## Claims

1. Grill grate with collecting tray, which is attachable directly below web profiles (1a) of the grill grate (1) and has a plurality of elongated apertures (3) for the passage of heat, wherein the apertures (3) are raised towards the grill grate (1) and are arranged in their longitudinal orientation in groups at an angle to one another,
**characterized in that**
the apertures (3) are arranged in a fishbone pattern relative to one another.

2. Grill grate according to claim 1, **characterized in that**
the apertures (3) each have a shape of an elongated hole with parallel side edges.

3. Grill grate according to claim 1 or 2, **characterized in that**
the web profiles (1a) are arranged in a trapezoidal or diamond shape and the apertures (3) are crossed in their longitudinal axis.

4. Grill grate according to one of the claims 1 to 3, **characterized in that**
the web profiles (1a) have a recessed grooving (1b) on a bearing surface.

5. Grill grate according to claim 4, **characterized in that**
when designed as a cast grate, the grooving (1b) is cast into the grate.

6. Grill grate according to one of the claims 1 to 5, **characterized in that**
the grill grate (1) has two bearing surfaces which can be positioned interchangeably.

7. Grill grate according to one of the claims 1 to 6, **characterized in that**
the collecting tray (2) has a plurality of hooks (4) pointing upwards, in particular on the outer edge of the collecting tray (2).

8. Grill grate according to claim 7, **characterized in that** the hooks (4) can be latched onto the web profiles (1a), wherein one of the hooks (4) is preferably arrow-shaped.

9. Grill grate according to one of the claims 1 to 8, **characterized in that**
the collecting tray (2) is produced as a stamped sheet metal part from steel, stainless steel or aluminum.

10. Grill grate according to one of the claims 1 to 9, **characterized in that**
the apertures (3) of one group are aligned at approximately 60° to the respective center of the apertures (3) of the other group.

11. Grill grate according to one of the claims 1 to 10, **characterized in that**
a plurality of drip pans (2a) is formed between the apertures (3).

12. Grill grate according to claim 11, **characterized in that**
the drip pans (2a) have a downwardly curved bottom (2b).

13. Grill grate according to claim 11 or 12, **characterized in that**
at least several, preferably all, drip pans (2a) are interconnected by embossed channels (2c).

14. Grill grate according to claim 13, **characterized in that**
several channels (2c) are aligned at right angles to the longitudinal extension of the apertures (3).

## Revendications

1. Grille de gril comportant une coque de recueillement qui peut être monté directement au-dessous de profilés à rainure (1a) de la grille de gril (1) et qui présente une multiplicité d'ouvertures allongées (3) pour le passage de la chaleur, les ouvertures (3) étant relevées vers la grille de gril (1) et étant disposées, dans leur orientation longitudinale, en groupes faisant un angle entre elles,
**caractérisée en ce que**
les ouvertures (3) sont disposées les unes par rapport aux autres selon un motif en chevron.

2. Grille de gril selon la revendication 1, **caractérisée en ce que**
les ouvertures (3) ont chacune une forme de trou oblong avec des bords latéraux parallèles.

3. Grille de gril selon la revendication 1 ou 2, **caractérisée en ce que**
les profilés à rainure (1a) sont disposés en forme trapézoïdale ou rhombique et les ouvertures (3) se croisent dans leur axe longitudinal.

4. Grille de gril selon l'une quelconque des revendications 1 à 3, **caractérisée en ce que** les profilés à rainure (1a) présentent une rainure en creux (1b) sur une surface d'appui.

5. Grille de gril selon la revendication 4, **caractérisée en ce que**
la rainure (1b) est co-moulée lors de la fabrication comme grille de fonte.

6. Grille de gril selon l'une des revendications 1 à 5, **caractérisée en ce que** la grille de gril (1) présente deux surfaces d'appui qui peuvent être positionnées alternativement.

7. Grille de gril selon l'une des revendications 1 à 6, **caractérisée en ce que**
la coque de recueillement (2) présente une pluralité de crochets (4) orientés vers le haut, en particulier sur le bord extérieur de la coque de recueillement (2).

8. Grille de gril selon la revendication 7, **caractérisée en ce que** les crochets (4) peuvent être encliquetés sur les profilés à rainure (1a), l'un des crochets (4) étant de préférence en forme de flèche.

9. Grille de gril selon l'une des revendications 1 à 8, **caractérisée en ce que**
la coque de recueillement (2) est fabriquée comme une pièce d'emboutissage en tôle d'acier, d'acier inoxydable ou d'aluminium.

10. Grille de gril selon l'une des revendications 1 à 9, **caractérisée en ce que**
les ouvertures (3) d'un groupe sont alignées à environ 60° avec le centre respectif des ouvertures (3) de l'autre groupe.

11. Grille de gril selon l'une des revendications 1 à 10, **caractérisée en ce que**
une pluralité de cuves d'égouttage (2a) est formée entre les ouvertures (3).

12. Grille de gril selon la revendication 11, **caractérisée en ce que**
les cuves d'égouttage (2a) ont un fond (2b) incurvé vers le bas.

13. Grille de gril selon la revendication 11 ou 12, **caractérisée en ce que**
au moins plusieurs, de préférence tous les cuves d'égouttage (2a) sont interconnectées par des rainures imprimées (2c).

14. Grille de gril selon la revendication 13, **caractérisée en ce que**
une pluralité de rainures (2c) sont alignées à angle droit par rapport à l'étendue longitudinale des ouvertures (3).
